Europäisches Patentamt

European Patent Office

Office européen des brevets

(19)

(11) Numéro de publication : **0 358 553 B1**

(12) **FASCICULE DE BREVET EUROPEEN**

(45) Date de publication du fascicule du brevet :
**27.12.95 Bulletin 95/52**

(51) Int. Cl.⁶ : **G06F 17/16**

(21) Numéro de dépôt : **89402393.6**

(22) Date de dépôt : **01.09.89**

(54) **Procédé de traitement de signaux numérisés représentatifs d'une image origine**

(30) Priorité : **05.09.88 FR 8811594**

(43) Date de publication de la demande :
**14.03.90 Bulletin 90/11**

(45) Mention de la délivrance du brevet :
**27.12.95 Bulletin 95/52**

(84) Etats contractants désignés :
**DE GB IT NL**

(56) Documents cités :
**EP-A- 0 206 892**
**1985 IEEE INTERNATIONAL CONFERENCE
ON ROBOTICS AND AUTOMATION, St. Louis,
Missouri, 25-28 mars 1985, pages 790-800,
IEEE, New York, US; T. GROSS et al.: "Warp
as a machine for low-level vision"**

(56) Documents cités :
**ICASSP 85 - PROCEEDINGS OF THE IEEE
INTERNATIONAL CONFERENCE ON ACOUS-
TICS, SPEECH AND SIGNAL PROCESSING,
Tampa, Forida, 26-29 mars 1985, vol. 3, pages
1009-1012, IEEE, New York, US; P.A. RAMA-
MOORTHY et al.: "Systolic architectures
based on barrel shifters for real-time signal
and image processing"**

(73) Titulaire : **COMMISSARIAT A L'ENERGIE
ATOMIQUE**
**31/33, rue de la Fédération**
**F-75015 Paris Cédex 15 (FR)**

(72) Inventeur : **David, Dominique**
**Les Cotes Bernard**
**F-38760 Saint Paul de Varces (FR)**
Inventeur : **Court, Thierry**
**2, Rue Jean Bocq**
**F-38600 Fontaine (FR)**

(74) Mandataire : **Signore, Robert et al**
**c/o BREVATOME**
**25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une procédé de traitement de signaux numérisés représentatifs d'une image origine, et notamment d'une image définie par des lignes de balayage, telle qu'une image produite à partir de signaux vidéo par exemple.

Cette invention s'applique à la restauration et à l'amélioration des contrastes des images de type vidéo, à la détection des contours et à la structuration des images qui sont notamment utilisées dans le contrôle industriel.

Le traitement consiste à transformer une image origine en une image arrivée.

Généralement, l'image d'arrivée contient les informations spécifiques de la caractéristique recherchée (contour, contraste, ...), le reste de l'image ayant été plus ou moins gommé.

Parmi ces transformations, les transformations dites de voisinage constituent une classe privilégiée permettant de résoudre un grand nombre de problèmes.

Dans ces transformations, un pixel de l'image d'arrivée est une fonction du même pixel et d'un certain nombre de ses voisins de l'image de départ.

Ces traitements de voisinage sont connus sous l'appellation traitement de voisinage 3x3, 5x5, ..., 30x30, pour indiquer la taille en X et Y de ce voisinage.

Lorsque l'on effectue des traitements de voisinage, deux paramètres peuvent varier :

- premièrement, le type de fonction appliqué au pixel de l'image de départ et à ses voisins. Il peut s'agir de prendre le plus grand (ou le plus petit) de tous ces pixels, ou la somme de tous ces pixels, ou la somme pondérée par des coefficients (positifs ou négatifs), ou encore toute fonction de plusieurs variables imaginables,
- deuxièmement, la taille du voisinage considéré. Très souvent des transformations faisant appel à des petits voisinages (3x3) respectent la structure fine et les détails de l'image de départ. Elles peuvent faire disparaître par contre des structures de taille importante. Cependant, on s'aperçoit que la mise en oeuvre de voisinage de grande taille permet de faire ressortir des variations lentes du niveau de l'image, des structures larges, et permet de s'affranchir presque totalement des problèmes de bruit. Il est par conséquent nécessaire d'effectuer des traitements sur des grands voisinages dans ces cas.

Le problème général qui se pose dans ces traitements est le suivant :

Pour une image de taille 512x512 pixels et un voisinage de taille nxn, le nombre d'opérations peut atteindre pour un traitement de convolution par exemple : 512x512xnxn multiplications et autant d'additions, soit de l'ordre de 5 000 000 d'opérations pour un voisinage 3x3, 50 000 000 d'opérations pour un voisinage 10x10, 500 000 000 pour un voisinage de 30x30.

Dans la plupart des applications de traitement d'image, il est important que ces traitements soient effectués à des cadences pouvant atteindre 25 images par seconde (cadence vidéo). C'est le cas par exemple lorsque l'on effectue des contrôles de production dans l'industrie. Il faut donc encore multiplier les chiffres ci-dessus par 25 pour obtenir le nombre requis d'opérations par seconde et l'on dépasse alors très largement les capacités des calculateurs actuels les plus puissants a fortiori pour les grands voisinages.

Quelques architectures spécialisées connues permettent d'effectuer des traitements sur des images. Certaines de ces architectures sont rappelées ci-dessous avec les inconvénients qu'elles présentent :

1) - un circuit connu sous la spécification GTR86 de la société ITMI permet de réaliser un seul traitement sur un voisinage 3x3, ce traitement étant appelé SOBEL.

Dans ce traitement, le pixel de l'image d'arrivée est calculé à partir du voisinage de l'image de départ en utilisant les masques suivants :

$$\begin{pmatrix} 1 & 2 & 1 \\ 0 & 0 & 0 \\ -1 & -2 & -1 \end{pmatrix} \qquad \begin{pmatrix} 1 & 0 & -1 \\ 2 & 0 & -2 \\ 1 & 0 & -1 \end{pmatrix}$$

Les coefficients de ces masques pondèrent les différents pixels du voisinage considéré. Cette architecture existe aujourd'hui sous la forme de circuits intégrés. Son inconvénient est qu'un seul traitement est réalisable et de plus sur le plus petit voisinage possible uniquement 3x3. Le champ d'application de ce circuit est donc limité. Il s'agit de l'extraction de contour dans le cas bien précis des masques de SOBEL.

2) - un circuit connu sous la spécification PLESSEY PDSP16401 comparable au précédent. Ce circuit effectue un seul traitement bien précis sur des voisinages 3x3 dérivés du traitement précédent.

3) - un circuit CC 33, dont le procédé de fonctionnement est décrit dans la demande de brevet EP-A-0 206 892 du 5 juin 1986, se limite à des voisinages 3x3, mais il est programmable. Il peut réaliser tous les traitements dits linéaires possibles sur un voisinage 3x3, c'est-à-dire les traitements à base de multiplications et additions seulement, qui sont nécessaires lorsque l'on fait une convolution. Avec ce circuit, seules les opérations linéaires sont possibles.

4) - un circuit LSI LOGIC qui est un convolueur 8x8. Dans ce circuit on ne peut réaliser également que des opérations linéaires (convolution) sur des masques pouvant atteindre une taille 8x8. Le voisinage ne peut dépasser cette taille. De plus, comme pour le circuit précédent, seule une partie des opérations de voisinage est possible. Enfin, la technologie retenue conduit à une surface de circuit très importante : un des plus gros circuits commercialisé aujourd'hui. Le circuit est donc très cher.

5) - un circuit HITACHI ISP2. Dans ce circuit on est limité à des opérations portant sur des voisinages 3x1, cependant pratiquement toutes les opérations envisageables sur un tel voisinage peuvent être réalisées.

Pour traiter des masques plus importants à partir des circuits présentés ci-dessus, on peut cascader plusieurs circuits ensemble.

Cependant, les limitations viennent du fait qu'il n'est pas possible de réaliser malgré tout des masques de grande taille car il faut cascader un nombre de circuits rédhibitoire et le peu de masques accessibles à ces circuits cascadés limite les traitements possibles.

L'architecture de ces circuits se présente sous forme d'une cascade de cellules de filtrage disposées dans des configurations classiquement appelées systoliques et dont le nombre est directement lié à la taille du traitement de voisinage.

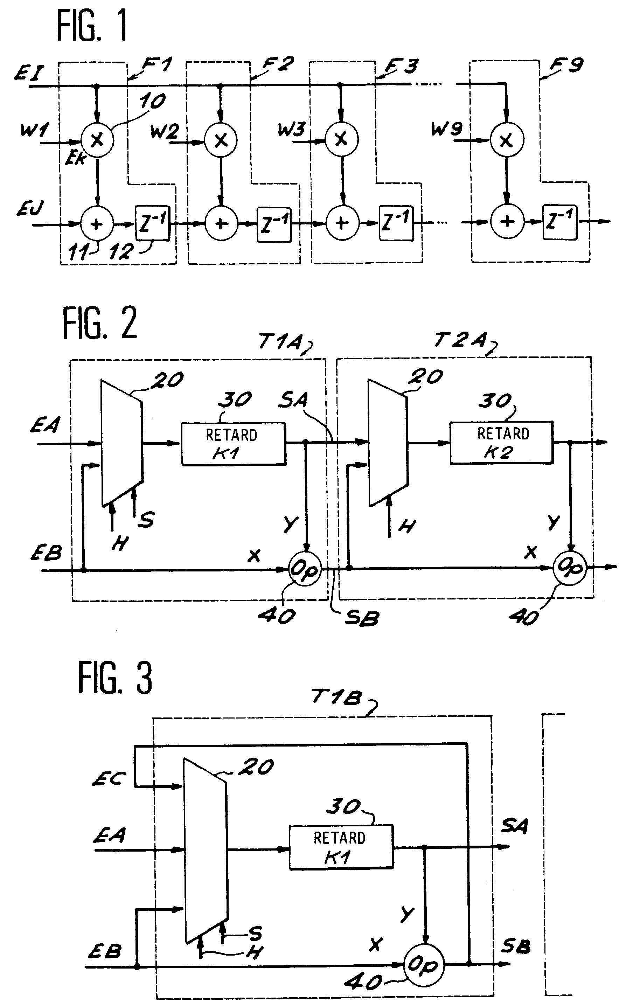

On a représenté un exemple d'architecture d'un tel circuit sur la figure 1.

Le circuit représenté comporte des cellules en cascades, F1...F9, ayant une entrée commune EI recevant les pixels de l'image origine, une entrée EJ permettant de les relier les unes aux autres, et une entrée indépendante EK qui permet de recevoir le coefficient de pondération désiré W1 pour la première ..... W9 pour la dernière.

Chaque cellule comporte un multiplieur 10, un additionneur 11 et un circuit à retard 12 introduisant un retard de un. Le nombre de cellules est identique à la taille du voisinage pris en compte, ce qui conduit à utiliser par exemple 9 cellules pour un voisinage 3x3, 121 cellules pour un voisinage 11x11.

Ces circuits, dont les caractéristiques et les inconvénients viennent d'être rappelés, ont été conçus pour effectuer des traitements à cadence vidéo soit 25 ou 30 images par seconde.

Il apparaît donc clairement qu'il n'existe pas de dispositif pouvant effectuer une large gamme de traitement (pas seulement des convolutions) sur des voisinages pouvant atteindre des tailles aussi importantes que 20x20, 30x30 ou plus et à cadence vidéo.

L'invention a pour but de remédier à ce problème et à pour objet un dispositif de traitement d'un signal numérisé représentatif d'une image origine constituée de pixels, dans lequel chaque pixel subit une transformation de voisinage n x q pour former une image arrivée, où $n \geq 1$, $q \geq 1$ et $n \times q \geq 3$, caractérisé en ce que le dispositif permet de réaliser une transformation linéaire ou non-linéaire du type Max (x,y) ou Min (x,y) et en ce qu'il comporte pour cela des cellules de filtrage T1A/T1B à au moins une entrée et au moins une sortie, dont le nombre est strictement inférieur à n x q, ces cellules étant reliées entre elles en série et comprenant respectivement :

- un circuit à retard programmable recevant sur une entrée dans le cas de la première cellule de la série, le signal numérisé de l'image origine et dans le cas des autres cellules, le signal de sortie de la cellule précédente, afin de retarder le signal présent sur son entrée d'un retard $\alpha_i$ ou $\beta_i$ fonction de n x q et du type de transformation choisie et,

- un circuit opérateur permettant de réaliser une opération arithmétique correspondante à ladite transformation linéaire ou une opération de comparaison correspondante à ladite transformation non-linéaire, ce circuit recevant d'une part un signal issu du circuit à retard et d'autre part le signal numérisé de l'image origine dans le cas de la première cellule ou le signal de sortie de la cellule précédente dans le cas des autres cellules, la sortie dudit circuit opérateur correspondant à la sortie SB de la cellule, le dispositif permettant de réaliser les transformations linéaires dont la transformée en z est factorisable en p polynômes du type $(1 + m_i z^{-\alpha_i})^{\pm 1}$, $m_i$ et $\alpha_i$ étant déterminés par la factorisation, le dispositif comportant pour cela des cellules de filtrage T1A et/ou T1B dont le nombre f est égal au nombre p de polynômes en facteur, chaque cellule introduisant un retard $\alpha_i$, égal au degré du polynôme correspondant, le nombre f de cellules pouvant être supérieure au nombre p dans le cas où le retard introduit par une cellule donnée est inférieur au retard considéré $\alpha_i$, le dispositif permettant de réaliser des transformations non-linéaires, le dispositif comportant pour cela des cellules de filtrage T1A et/ou T1B dont le nombre g est égal à Max (x,y) + 1 avec x et y tels que $2^x < n \leq 2^{x+1}$ et $2^y < q \leq 2^{y+1}$, chaque cellule i ayant un retard $\beta_i$ égal à $2^{i-1}$, la dernière cellule ayant un retard égal à $n-2^x$ si Max (x,y) = x ou $q-2^y$ si Max (x,y) = y, le nombre g de cellules pouvant être supérieur à Max (x,y) + 1 dans le cas où le retard introduit par une cellule donnée est inférieur au retard $\beta i$ considéré.

Selon une caractéristique de l'invention, dans le cas où le retard $\alpha i$ ou $\beta i$ n'est pas obtenu par une seule cellule, V cellules sont cascadées pour obtenir le retard $\alpha i$ ou $\beta i$ désiré de sorte que la somme des retards introduits par chaque cellule soit égale à $\alpha i$ ou $\beta i$.

Avantageusement, au moins V-1 cellules utilisées pour obtenir le retard considéré $\alpha i$ ou $\beta i$ comportent au moins une deuxième entrée reliée au circuit de retard et au moins V-1 cellules utilisées pour obtenir ce retard comportent au moins une deuxième sortie provenant du circuit de retard de manière à ce que les V cellules puissent être mises en cascade, la première sortie de l'une étant reliée à la première entrée (EB) de la cellule suivante, la deuxième sortie (SA) de cette même cellule étant reliée à la deuxième entrée (EA) de la même cellule suivante.

Dans le cas où la transformée en z comporte au moins un polynôme du type $(1+miz^{-\alpha i})^{-1}$, la ou les cellules correspondant à ce polynôme comporte une troisième entrée pour recevoir le signal de sortie issu de la sortie de cette même cellule.

Avantageusement, le dispositif comprend une ou plusieurs cellules de filtrage qui comportent une quatrième entrée pour recevoir le signal provenant d'une cellule amont pour effectuer des traitements inter-image.

Avantageusement, le circuit à retard recevant le signal provenant de l'une des entrées de la cellule, le circuit opérateur reçoit le signal de sortie du circuit à retard et le signal de la première entrée de la cellule.

Le dispositif se caractérise également en ce que chaque cellule comporte en outre des moyens d'aiguillage des signaux d'entrée.

Avantageusement, les moyens d'aiguillage sont constitués par des multiplexeurs.

Selon un mode de réalisation, le circuit à retard comporte un registre à décalage formé d'une série de k registres, k étant supérieur ou égal au retard de la cellule considérée, un circuit d'aiguillage dont chaque entrée est reliée à une sortie d'un registre.

Selon un mode de réalisation, le circuit opérateur comporte une unité arithmétique et logique recevant deux signaux X et Y, le signal X provenant de la première entrée (EB) de la cellule et le signal Y étant issu de la sortie du circuit à retard de la cellule.

Le circuit opérateur comporte en outre un multiplieur placé entre la sortie du circuit à retard et une entrée de l'unité arithmétique et logique.

Le circuit opérateur comporte également un circuit d'aiguillage à au moins deux entrées dont une première entrées est reliée à la sortie du circuit à retard de la cellule et dont la deuxième entrée est reliée à la première entrée de la cellule, ce circuit étant commandé par un signal délivré par l'unité arithmétique et logique.

Avantageusement, le circuit d'aiguillage comporte une troisième entrée reliée à la sortie de l'unité arithmétique et logique pour effectuer des transformations linéaires.

Le dispositif de traitement se caractérise en outre en ce qu'il comporte des moyens de commande pour chaque cellule permettant de prédéfinir la position des moyens d'aiguillage d'entrée, le retard du circuit à retard, la fonction arithmétique et logique du circuit opérateur.

Les moyens de commande comportent un registre de programmation.

Avantageusement, chaque cellule comporte en outre deux registres supplémentaires, un premier registre entre la sortie du circuit à retard et une entrée du circuit opérateur, et un deuxième registre entre la première entrée EB de la cellule et l'autre entrée du circuit opérateur.

Le dispositif se caractérise en ce qu'il est réalisé sous forme de circuit intégré par exemple en technologie prédiffusée CMOS.

L'invention sera mieux comprise à la lecture de la description qui suit et à l'examen des figures qui l'accompagnent. Celles-ci ne sont données qu'à titre indicatif et nullement limitatif de l'invention. Les figures montrent :

- la figure 1, le schéma de l'architecture d'un circuit de traitement d'images selon l'état de la technique ;
- la figure 2, le schéma d'architecture d'un dispositif de traitement de signaux numérisés conforme à l'invention avec un premier mode de réalisation,
- la figure 3, le schéma d'architecture d'un dispositif de traitement de signaux numérisés conforme à l'invention avec un deuxième mode de réalisation ;
- la figure 4, le schéma d'un dispositif de traitement conforme à l'invention selon la figure 3 et correspondant à un mode particulier de fonctionnement ;
- la figure 5, le schéma correspondant à une réalisation particulière du circuit à retard 30 ;
- la figure 6, le schéma d'un premier mode de réalisation du circuit opérateur 40 permettant d'effectuer des opérations linéaires ;
- la figure 7, le schéma d'un deuxième mode de réalisation d'un circuit 40 permettant d'effectuer des opérations linéaires et non linéaires ;
- la figure 8, le schéma détaillé d'un exemple de réalisation d'une cellule de type A ou B selon les figures

EP 0 358 553 B1

2 et 3 ;
- la figure 9, une architecture d'un dispositif de traitement conforme à l'invention réalisé sous forme d'un circuit intégré.

Le dispositif de traitement de signaux numérisés conforme à l'invention permet de réaliser tout filtrage linéaire dont la transformée en z est factorisable en polynôme du type $(1+m_i z^{-\alpha_i})^{\pm 1}$, soit plus précisément tout polynôme P1 pouvant s'écrire comme un rapport de produit de polynôme ou simplement tout polynôme P2 s'écrivant comme un produit de plusieurs polynômes :

$$P1 = \frac{(1 + b1\, z^{-1})\,(1 + b2\, z^{-2})....(1 + bn\, z^{-k})}{(1 + C1\, z^{-1}).............(1 + Cm\, z^{-\ell})}$$

ou

$$P2 = (1 + b1\, z^{-1})\,(1 + b2\, z^{-2})....(1 + bn\, z^{-k})$$

dans lesquels chaque facteur correspond à un polynôme de degré donné de manière à obtenir la fonction de transfert de filtrage désirée.

On rappelle que la transformée en z est l'équivalent, pour les signaux échantillonnés, de la transformée de Fourier.

Le dispositif de l'invention permet également de réaliser tout filtrage non linéaire du type recherche d'un extremum dans un voisinage donné.

Contrairement au circuit de l'état de la technique, le nombre de cellules de filtrage du dispositif conforme à l'invention n'est pas lié à la taille du voisinage traité. D'une part donc ce dispositif permet d'effectuer des transformations de voisinage mettant en oeuvre des voisinages dont la taille est variable et peut atteindre des valeurs importantes et, d'autre part, on peut effectuer des transformations sur tous signaux numérisés et pas uniquement sur des signaux d'image.

On a représenté sur la figure 2 un dispositif de traitement conforme à l'invention, ce dispositif comprenant par exemple deux cellules T1A, T2A.

Dans le cas d'une transformation linéaire, la première cellule T1A permet d'introduire un retard correspondant au degré du premier polynôme de la transformée en z de la fonction de filtrage à réaliser. La deuxième cellule T2A permet d'introduire un retard correspondant au degré du deuxième polynôme de cette transformée en z.

Deux cellules reliées ensemble comme représenté sur la figure 2 permettent donc d'effectuer une transformation sur un voisinage donné, 3x1 ou 3x3 ou plus, la sortie SB d'une cellule étant reliée à l'entrée EB de la cellule aval.

Le nombre f de cellules est égal au nombre p de polynôme en facteur. Chaque cellule introduit donc un retard qui est égal au degré $\alpha_i$ du polynôme. Comme cela sera explicité ultérieurement, on peut préférer dans certaines applications utiliser deux cellules ou plus en cascade pour obtenir le retard désiré, le nombre f de cellules étant alors supérieur au nombre p mais dans tous les cas ce nombre est très inférieur à nxq, nxq représentant la taille du voisinage traité.

Dans le cas d'une transformation non linéaire, chaque cellule i introduit un retard $\beta_i$ égal à $2^{i-1}$ et la dernière cellule introduit un retard égal x à $n-2^x$ si le maximum entre x et y est égal à x ou un retard égal à $q-2^y$ si le maximum de x et y est égal à y, avec x et y tels que $2^x < n \leq 2^{x+1}$ et $2^y < q \leq 2^{y+1}$, le nombre g de cellules de filtrage pour une telle transformation étant égal au maximum $(x,y)+1$.

Ainsi, la première cellule de filtrage a un retard de $2^0$, la deuxième cellule un retard de $2^1$ ..., la (g-1)ième cellule un retard de $2^{Max(x,y)-1}$ et la gième cellule un retard de $n-2^x$ ou $q-2^y$.

Bien entendu, comme précédemment, le nombre g de cellules peut être supérieur à $Max(x,y)+1$ dans le cas où le retard introduit par une cellule est inférieur au retard considéré $\beta_i$ et que plusieurs cellules sont cascadées pour obtenir ce retard $\beta_i$.

Le dispositif de traitement conforme à l'invention comporte donc des cellules de filtrage tel que représenté sur la figure 2. Chaque cellule T1A et T2A comporte en outre un circuit opérateur 40 qui reçoit d'une part le signal Y de sortie du circuit à retard 30 et qui reçoit d'autre part le signal X provenant d'une première entrée EB de la cellule.

Chaque cellule comporte éventuellement une deuxième entrée EA et une deuxième sortie SA, cette deuxième entrée permet, sauf dans le cas de la première cellule qui reçoit uniquement le même signal que l'entrée EB, c'est-à-dire les pixels d'une image dans le cas d'un traitement d'images, de recevoir le signal de sortie délivré par le circuit à retard 30 d'une cellule amont sur sa deuxième sortie SA.

Chaque cellule peut donc comporter au moins deux entrées, EA et EB, et deux sorties SA et SB. La sortie SA délivre le signal Y délivré par le circuit à retard 30 de la cellule considérée et la sortie SB délivre le signal issu de l'opérateur 40 de la cellule considérée.

L'entrée EA et la sortie SA permettent donc comme on le verra ultérieurement de cascader des retards pour obtenir le retard $\alpha_i$ ou $\beta_i$ désiré.

5

Lorsque les cellules sont cascadées, la sortie SA d'une cellule est reliée à l'entrée EA de la cellule qui la suit, et la sortie SB de la cellule est reliée à l'entrée EB de la cellule qui la suit.

Les opérateurs 40 sont choisis en fonction de la transformation à réaliser. Il peut s'agir d'opérations linéaires, par exemple d'opérations du type X+KY, k étant un coefficient réel quelconque fixé une fois pour toutes pour un traitement donné, ou d'opérations non linéaires du type min(X,Y) ou max(X,Y), c'est-à-dire de délivrer la valeur minimum entre X,Y ou la valeur maximum entre X,Y.

La figure 2 correspond à un premier mode particulier de réalisation des cellules constituant le dispositif de traitement conforme à l'invention que l'on qualifie de type A.

La figure 3 représente un deuxième mode de réalisation dans lequel les cellules sont légèrement différentes de celles de la figure 2 et correspondent à un mode qui sera qualifié de type B.

La structure de la cellule de type B comporte par rapport à la cellule de type A un rebouclage de la sortie du circuit opérateur 40 vers une troisième entrée EC de la cellule, la cellule comprenant donc dans ce cas une troisième entrée EC. La sortie SB d'une cellule de ce type est donc rebouclée sur l'entrée EC.

Dans les deux types de cellule un circuit d'aiguillage 20 est placé sur les entrées EA, EB ou EA, EB, EC, afin de sélectionner l'une d'entre elles. La sortie de ce circuit sert d'entrée au circuit à retard 30. Les circuits d'aiguillage 20 sont synchronisés sur une horloge H et commandés par un signal de sélection S de manière tout à fait classique.

Ainsi, à partir d'une même cellule de type A, le circuit d'aiguillage 20 permet de sélectionner :
- soit l'entrée EA pour cascader des retards,
- soit l'entrée EB, lorsque la cellule représente un polynôme du type $(1+miz^{-\alpha i})$ ou permet d'effectuer une opération non linéaire ou s'il s'agit de la première cellule du dispositif,

et dans le cas d'une cellule de type B, le circuit d'aiguillage permet de sélectionner en outre l'entrée EC lorsque la cellule correspond à un polynôme du type $(1+miz^{-\alpha i})^{-1}$.

D'une manière générale, le dispositif selon l'invention comporte une cellule de filtrage telle que la cellule T1A (ou T1B) par polynôme ou par opération non linéaire. Le retard k des circuits à retard 30 sera égal au degré du polynôme dans la mesure où ce retard ne dépasse pas le retard maximum possible pour la cellule. Si le degré du polynôme est supérieur à ce retard maximum possible il suffit de cascader par exemple deux cellules pour que la somme des retards obtenus soit égale au degré du polynôme.

De même dans le cas non-linéaire, le retard k des circuits 30 sera égal au degré $\beta i$ défini ci-dessus dans la mesure où ce retard ne dépasse par le retard maximum possible pour la cellule. Dans le cas contraire il suffit de cascader des cellules pour que la somme des retards de ces cellules soit égale à $\beta i$.

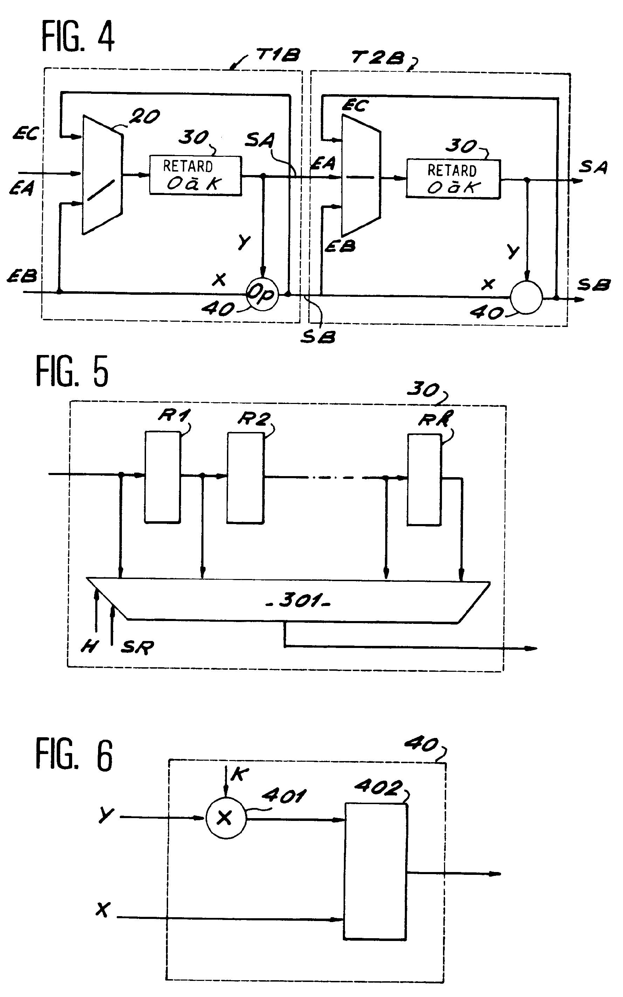

Une telle configuration a été représentée sur la figure 4. Sur cette figure, on a pris comme exemple une cascade de deux cellules de type B, T1B, T2B. Bien entendu, il est possible d'obtenir cette cascade des retards en prenant deux cellules de type A ou une cellule de type A ou une cellule de type B.

Pour obtenir le retard désiré, il suffit de fixer un retard égal à k dans la première cellule T1B et un retard compris entre 1 et k dans la deuxième cellule T2B de manière à ce que la somme de ces deux retards soit égale au retard $\alpha i$ ou $\beta i$ désiré. Dans le cas de cascade de plusieurs cellules pour obtenir le retard désiré, l'opérateur 40 des cellules cascadées (T1B dans le cas de la figure 4) excepté la dernière, consistera en fait en une fonction identité, c'est-à-dire que le signal X sera transmis sans être combiné au signal Y, lequel est appliqué à l'entrée EA de la cellule suivante T2B, le signal X étant appliqué à l'entrée EB de la cellule T2B.

Dans le cas où deux cellules sont reliées dans un autre but que de cascader deux retards, pour un polynôme de la forme $1+Kz^{-\alpha}$ et quel que soit $\alpha$, les deux types de cellule A ou B permettent de rajouter à une entrée le produit par K de l'autre entrée ; et dans le cas d'une transformation non-linéaire, l'opérateur de ces cellules permet de sélectionner le plus grand ou le plus petit des signaux X,Y.

La mise en cascade généralisée de toutes les cellules de ce type permet donc de réaliser la fonction désirée dans un ordre quelconque.

Sur la figure 5, on a représenté un exemple particulier de réalisation d'un circuit à retard 30. Ce circuit est constitué d'un registre à décalage constitué de k registres (ou étages) R1, R2,... Rk. La sortie de chaque registre est reliée à une entrée déterminée d'un circuit d'aiguillage 301. Ce circuit d'aiguillage est commandé par le signal d'horloge H et par un signal de sélection SR.

Le circuit d'aiguillage 301 permet en fait d'aiguiller la sortie d'un registre, mais aussi de ne prendre en compte que les sorties désirées qui sont fonction du décalage que l'on voudra obtenir. Si le retard désiré est inférieur à k, on ne prendra pas en compte tous les registres.

Le signal de sortie du circuit d'aiguillage 301 délivre donc le signal Y et est appliqué d'une part à l'entrée EA de la cellule suivante et, d'autre part, à une entrée de l'opérateur 40. On trouve donc sur les sorties successives de chacun de ces registres les valeurs présentées à l'entrée du premier registre un coup avant pour R1, deux coups avant pour R2, ...k coups avant pour Rk. L'aiguillage a k entrées ou plus, prises sur chacun de ces registres, et permet de déterminer par conséquent la taille du retard donné par le nombre de registres entre l'entrée du circuit à retard et l'entrée sélectionnée de l'aiguillage.

Sur la figure 6, on a représenté un premier mode de réalisation d'un circuit opérateur 40. Ce mode de réalisation correspond à des opérations linéaires sur les signaux Y et X. Le circuit opérateur 40 comporte une unité arithmétique et logique 402 qui peut être combinée avec un multiplieur 401 afin de réaliser des opérations du type X+KY, K étant un coefficient appliqué au multiplieur 401.

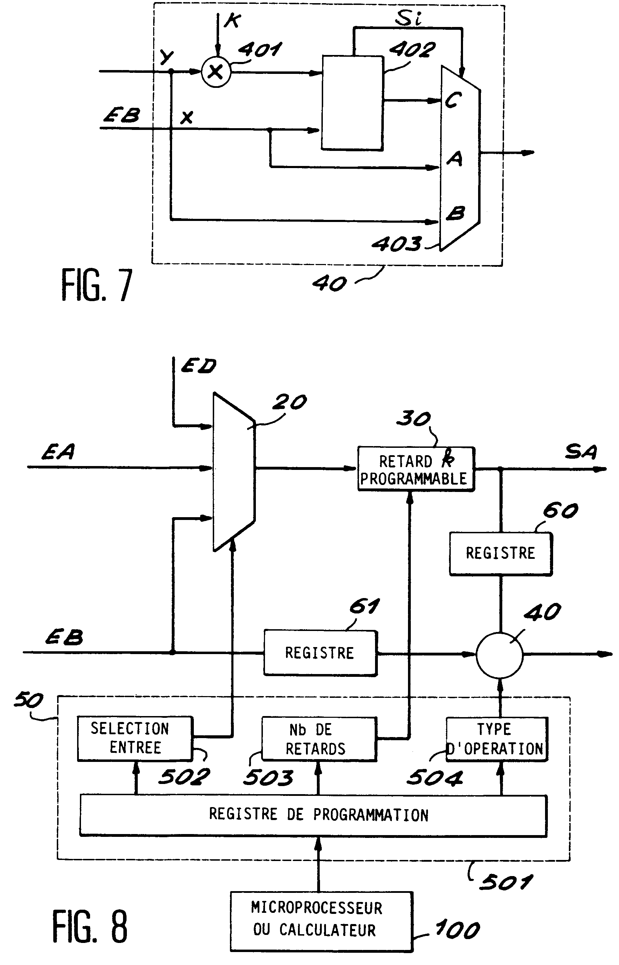

Sur la figure 7, on a représenté un autre mode de réalisation du circuit opérateur 40. Dans ce mode de réalisation on dispose en plus de l'unité arithmétique et logique 402 (et éventuellement du multiplieur 401), d'un circuit d'aiguillage 403 réalisé par exemple par un multiplexeur. Le circuit opérateur permet ainsi de réaliser des opérations linéaires et non linéaires. Pour cela, le circuit d'aiguillage est susceptible de recevoir à une entrée C la sortie de l'unité arithmétique et logique 402, à une autre entrée A le signal provenant de l'entrée EB de la cellule et à une autre entrée B le signal provenant de la sortie du circuit à retard de cette même cellule.

Selon un premier mode de fonctionnement, l'unité arithmétique et logique 402 effectue des opérations du type X-Y et le bit de signe du résultat, représenté par le signal Si, indique si X-Y est positif ou négatif. Ce bit est utilisé pour commander le multiplexeur 403 à deux entrées A et B. Le signal Si permet donc de sélectionner soit A, soit B, selon que X-Y est positif ou négatif.

La troisième entrée C du multiplexeur 403 permet selon un deuxième mode de fonctionnement de réaliser des opérations linéaires, et à ce moment là c'est la sortie de l'unité arithmétique et logique présentée à l'entrée C qui sera sélectionnée en sortie du dispositif d'aiguillage 403.

Dans le cas où le circuit opérateur n'est utilisé que pour des opérations non-linéaires, celui-ci peut ne pas comporter de multiplieur et le circuit d'aiguillage peut n'avoir que deux entrées A et B.

Sur la figure 8, on a représenté le schéma détaillé d'un exemple de réalisation d'une cellule de type A ou B tel que représenté sur les figures 2 et 3.

Selon un mode préféré de réalisation, chaque cellule comporte des moyens de commande 50. Ces moyens comprennent un registre de programmation 501 qui permet au travers de portes logiques 502, 503, 504, respectivement d'assigner à chaque cellule la position du circuit d'aiguillage 20, la valeur du retard que doit prendre le circuit à retard 30, la fonction réalisée par le circuit opérateur 40.

Ce registre 501 est programmé une fois pour toutes pour un traitement donné. Une nouvelle valeur de programmation pourra être effectuée par exemple au moyen d'un microprocesseur ou d'un calculateur 100, ce qui permettra de changer en particulier le traitement effectué par le circuit opérateur. La programmation du registre à l'aide d'un microprocesseur quelconque ou d'un calculateur est tout à fait classique en soit.

Les cellules comportent en outre deux registres supplémentaires : un premier registre 60 entre la sortie du circuit à retard et une entrée du circuit opérateur 40 et un second registre 61 entre l'entrée EB de la cellule et l'autre entrée du circuit opérateur 40. Ces registres n'ont pas d'incidence sur le fonctionnement de l'ensemble. Ils sont utilisés de manière classique (appelée pipeline) pour augmenter la vitesse de traitement de l'ensemble.

Une entrée supplémentaire ED peut en outre être prévue dans le circuit d'aiguillage 20 pour permettre d'effectuer dans la cellule qui comporte cette entrée supplémentaire des opérations dites inter-images (somme de deux images ou/et une fonction logique et entre deux images...) entre la sortie de la cellule amont qui délivre le signal image traité par les cellules amont successives et l'image présentée à cette entrée supplémentaire ED.

Le circuit d'aiguillage 20 est réalisé au moyen d'un multiplexeur par exemple.

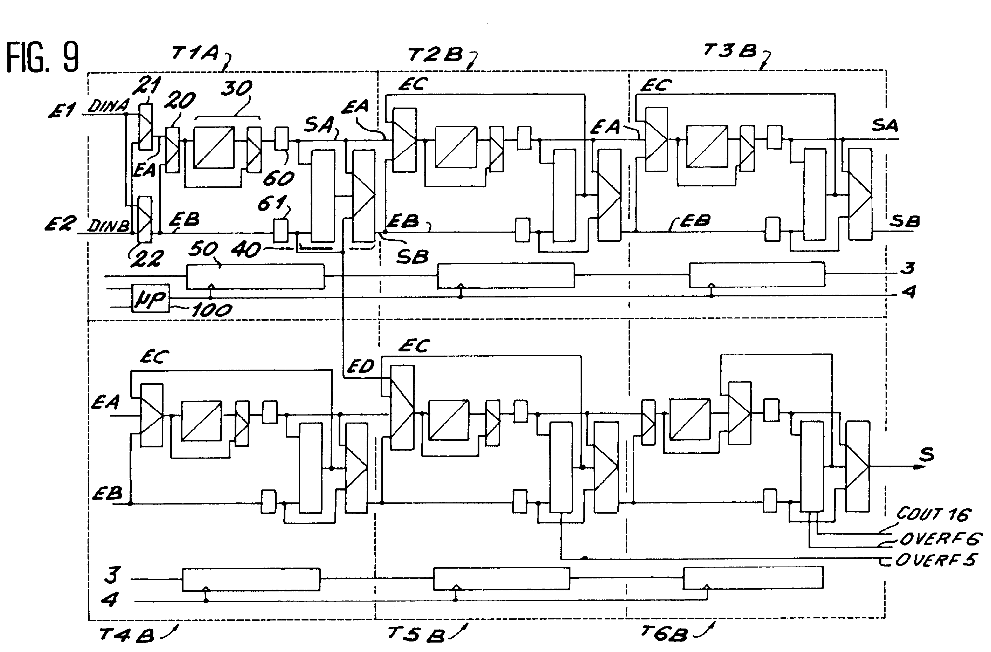

Sur la figure 9, on a représenté un exemple de réalisation particulier d'un dispositif de traitement conforme à l'invention sous forme d'un circuit intégré.

Ce circuit est constitué d'un assemblage de six cellules telles que décrites à propos des figures 2 et 3. La première cellule est une cellule de type A, l'ensemble des autres cellules sont des cellules de type B.

La première cellule T1A comporte en outre deux multiplexeurs 21 et 22 qui rendent parfaitemeent symétriques les deux entrées DINA et DINB de cette cellule et qui permet donc de rentrer deux images E1 et E2 dans le dispositif et traiter soit l'une de ces images, soit les deux ensemble.

On trouve un branchement direct entre la cellule T1A et la cellule T5B (entrée ED de cette cellule T5B) pour permettre un traitement inter-image entre une des images origine du dispositif et cette même image traitée par les cellules situées en amont de la cellule T5B.

La dynamique de calcul sur les données (ou largeur des mots de données) est de 12 bits sur les cellules T1A à T5B et de 16 bits sur la cellule T6B. Cela donne une marge suffisante pour traiter des images dont les pixels sont codés sur 8 bits. Les 16 bits de la cellule T6B permettent des opérations nécessitant une grande dynamique (accumulation, projection,...).

Un bit supplémentaire a été rajouté, qui accompagne le pixel au cours de son traitement par le circuit : c'est un marqueur qui permet de valider ou non une condition sur un pixel. Ce marqueur est recalculé dans le circuit en tenant compte du voisinage considéré.

Des bits de dépassement de capacité signalent à l'utilisateur que la dynamique de l'unité arithmétique et logique de la cellule T5B et/ou de l'unité arithmétique et logique de la cellule T6B a été dépassée. On retrouve ces bits de sortie à la sortie de l'unité arithmétique et logique de la cellule T6B sous la référence C OUT 16, OVER F6 et de la cellule T5B sous la référence OVER F5.

Pour chaque cellule et en fonction de la transformation à réaliser, l'on aura, avant de procéder à tout traitement, rentré au moyen du registre de programmation de chacune de ces cellules :
- les valeurs des bits qui indiquent à l'opérateur quelles fonctions de ces entrées il doit calculer,
- les valeurs des bits qui déterminent la longueur du retard voulu,
- les valeurs des bits qui déterminent les données sélectionnées en entrée ou en sortie garantissant les diverses façons possibles d'assembler les cellules.

Soit un mot de 11 bits par cellule et en tout six mots de 11 bits.

Ce circuit a été réalisé en technologie prédiffusée ES2 CMOS 2 $\mu$m, sa surface est de 85 mm$^2$ et le boîtier est un LC 84 broches. Ce circuit comporte 50 000 transistors environ, ce qui est très peu comparé aux réalisations classiques.

Il est tout à fait possible de mettre en cascade deux circuits tels que celui qui vient d'être décrit et d'atteindre des traitements sur des voisinages encore plus grands : deux circuits intégrés cascadés permettent d'effectuer des opérations comme la morphologie ou certaines opérations linéaires sur des voisinages atteignant 44x44. Le circuit décrit à propos de la figure 9 permet de réaliser à cadence vidéo toutes les opérations qui suivent :
- érosion ou dilatation (morphologie) jusqu'à 20x20,
- moyenne jusqu'à 20x20,
- extraction de contour jusqu'à 11x11,
- extraction de texture par masque de LAW,
- toute opération inter-image (opérations d'addition, de soustraction, fonction ET logique, fonction OU,...).

L'invention a été décrite à partir de cellules de filtrage ayant plusieurs entrées EA, EB, EC, ED, pouvant être sélectionnées de façon à réaliser à partir d'un même type de cellule plusieurs opérations. Bien entendu, on aurait pu réaliser une cellule pour chaque opération à réaliser.

Par ailleurs, le rebouclage de la cellule de type B par l'entrée EC de la cellule pourrait être remplacé par un rebouclage à l'entrée du dispositif d'aiguillage 301 du circuit à retard 30 comme représenté dans la cellule T6B dans le cas d'un retard d'un coup d'horloge.

## Revendications

1. Dispositif de traitement d'un signal numérisé représentatif d'une image origine constituée de pixels, dans lequel chaque pixel subit une transformation de voisinage n x q pour former une image arrivée, où n $\geqq$ 1, q $\geqq$ 1 et n x q $\geqq$ 3, caractérisé en ce que le dispositif permet de réaliser une transformation linéaire ou non-linéaire du type Max (x,y) ou Min (x,y) et en ce qu'il comporte pour cela des cellules de filtrage (T1A/T1B) à au moins une entrée et au moins une sortie, dont le nombre est strictement inférieur à n x q, ces cellules étant reliées entre elles en série et comprenant respectivement :
   - un circuit (30) à retard programmable recevant sur une entrée, dans le cas de la première cellule de la série, le signal numérisé de l'image origine et dans le cas des autres cellules, le signal de sortie (SB) de la cellule précédente, afin de retarder le signal présent sur son entrée d'un retard ($\alpha_l$ ou $\beta_l$) fonction de n x q et du type de transformation choisie et,
   - un circuit (40) opérateur permettant de réaliser une opération arithmétique correspondant à ladite transformation linéaire ou une opération de comparaison correspondant à ladite transformation non-linéaire, ce circuit recevant d'une part un signal issu du circuit à retard et d'autre part le signal numérisé de l'image origine dans le cas de la première cellule ou le signal de sortie de la cellule précédente dans le cas des autres cellules, la sortie dudit circuit opérateur (40) correspondant à la sortie (SB) de la cellule,
   le dispositif permettant de réaliser les transformations linéaires dont la transformée en z est factorisable en p polynômes du type $(1 + m_i z^{-\alpha_i})^{\pm 1}$, $m_i$ et $\alpha_i$ étant déterminés par la factorisation, le dispositif comportant pour cela des cellules de filtrage (T1A et/ou T1B) dont le nombre f est égal au nombre p de polynômes en facteur, chaque cellule introduisant un retard $\alpha_i$, égal au degré du polynôme correspondant, le nombre f de cellules pouvant être supérieur au nombre p dans le cas où le retard introduit par une cellule donnée est inférieur au retard considéré $\alpha_i$, le dispositif permettant de réaliser des transformations non-linéaires, le dispositif comportant pour cela des cellules de filtrage (T1A et/ou T1B) dont le nombre g est égal à Max (x,y) + 1 avec x et y tels que $2^x < n \leqq 2^{x+1}$ et $2^y < q \leqq 2^{y+1}$, chaque cellule i ayant un retard $\beta_i$ égal à

$2^{l-1}$, la dernière cellule ayant un retard égal à n-$2^x$ si Max (x,y) = x ou q-$2^y$ si Max (x,y) = y, le nombre g de cellules pouvant être supérieur à Max (x,y) $^{+1}$ dans le cas où le retard introduit par une cellule donnée est inférieur au retard $\beta i$ considéré.

2. Dispositif de traitement selon la revendication 1, caractérisé en ce que dans le cas où le retard $\alpha i$ ou $\beta i$ n'est pas obtenu par une seule cellule, V cellules sont cascadées pour obtenir le retard $\alpha i$ ou $\beta i$ désiré de sorte que la somme des retards introduits par chaque cellule soit égale à $\alpha i$ ou $\beta i$.

3. Dispositif de traitement selon l'une quelconque des revendications 1 ou 2, caractérisé en ce qu'au moins V-1 cellules utilisées pour obtenir le retard considéré $\alpha i$ ou $\beta i$ comportent au moins une deuxième entrée (EA) reliée au circuit à retard (30) et en ce qu'au moins V-1 cellules utilisées pour obtenir ce retard comportent au moins une deuxième sortie (SA) provenant du circuit à retard (30), de manière à ce que les V cellules puissent être mises en cascade, la première sortie de l'une étant reliée à la première entrée (EB) de la cellule suivante, la deuxième sortie (SA) de cette même cellule étant reliée à la deuxième entrée (EA) de la même cellule suivante.

4. Dispositif de traitement selon l'une quelconque des revendications 1 à 3, caractérisé en ce que dans le cas où la transformée en z comporte au moins un polynôme du type $(1+miz^{-\alpha i})^{-1}$ la ou les cellules correspondant à ce polynôme comporte une troisième entrée pour recevoir le signal de sortie (SB) de cette même cellule.

5. Dispositif de traitement selon l'une quelconque des revendications 1 à 4, caractérisé en ce que le dispositif comprend une ou plusieurs cellules de filtrage qui comportent une quatrième entrée (ED) pour recevoir le signal provenant d'une cellule amont pour effectuer des traitements inter-images.

6. Dispositif de traitement selon l'une quelconque des revendications 1 à 5, caractérisé en ce que, le circuit à retard recevant le signal provenant de l'une des entrées (EA, EB, EC ou ED) de la cellule, le circuit opérateur (40) reçoit le signal de sortie du circuit à retard (30) et le signal de la première entrée (EB) de la cellule.

7. Dispositif de traitement selon l'une quelconque des revendications 1 à 6, caractérisé en ce que chaque cellule comporte en outre des moyens d'aiguillage (20) des signaux d'entrée.

8. Dispositif de traitement selon la revendication 7, caractérisé en ce que les moyens d'aiguillage (20) sont constitués par des multiplexeurs.

9. Dispositif selon l'une quelconque des revendications 1 à 8, caractérisé en ce que le circuit à retard (30) comporte un registre à décalage formé d'une série de k registres (R1, R2, ... Rk), k étant supérieur ou égal au retard de la cellule considérée, un circuit d'aiguillage (301) dont chaque entrée est reliée à une sortie d'un registre.

10. Dispositif de traitement selon l'une quelconque des revendications 1 à 9, caractérisé en ce que le circuit opérateur (40) comporte une unité arithmétique et logique recevant deux signaux X et Y, le signal X provenant de la première entrée (EB) de la cellule et le signal Y étant issu de la sortie du circuit à retard (30) de la cellule.

11. Dispositif de traitement selon la revendication 10, caractérisé en ce que le circuit opérateur comporte en outre un multiplieur (401) placé entre la sortie du circuit à retard (30) et une entrée de l'unité arithmétique et logique (402).

12. Dispositif de traitement selon la revendication 10 ou 11, caractérisé en ce que le circuit opérateur (40) comporte également un circuit d'aiguillage (403) à au moins deux entrées dont une première entrée est reliée à la sortie du circuit à retard de la cellule et dont la deuxième entrée est reliée à la première entrée de la cellule, ce circuit étant commandé par un signal délivré par l'unité arithmétique et logique (402).

13. Dispositif de traitement selon la revendication 12, caractérisé en ce que le circuit d'aiguillage (403) comporte une troisième entrée reliée à la sortie de l'unité arithmétique et logique pour effectuer des transformations linéaires.

14. Dispositif de traitement selon l'une quelconque des revendications 1 à 13, caractérisé en ce qu'il comporte en outre des moyens de commande pour chaque cellule permettant de prédéfinir la position des moyens (20) d'aiguillage d'entrée, le retard du circuit à retard (30), la fonction arithmétique et logique du circuit opérateur (40).

**15.** Dispositif de traitement selon la revendication 14, caractérisé en ce que les moyens de commande (50) comportent un registre de programmation (501).

**16.** Dispositif de traitement selon l'une quelconque des revendications 1 à 15, caractérisé en ce que chaque cellule comporte en outre deux registres supplémentaires, un premier registre (60) entre la sortie du circuit à retard (30) et une entrée du circuit opérateur (40), et un deuxième registre (61) entre la première entrée (EB) de la cellule et rautre entrée du circuit opérateur (40).

**17.** Dispositif selon l'une quelconque des revendications 1 à 16, caractérisé en ce que ce dispositif est réalisé sous forme de circuit intégré.

**Patentansprüche**

**1.** Vorrichtung zur Verarbeitung eines Digitalsignals, das repräsentativ ist für ein aus Pixeln bestehendes Orginalbild, bei dem jedes Pixel eine Umgebungstransformation n x q erfährt, um ein Eingangsbild zu bilden, bei dem $n \geqq 1$, $q \geqq 1$ und $n \times q \geqq 3$,
**dadurch gekennzeichnet,**
daß die Vorrichtung ermöglicht, eine Linear- oder Nichtlinieartransformation des Typs Max (x,y) oder Min (x,y) auszuführen und dadurch, daß sie dazu Filterzellen (T1A/T1B) mit wenigstens einem Eingang und wenigstens einem Ausgang umfaßt, deren Anzahl strikt kleiner als n x q ist, wobei diese Zellen in Reihe miteinander verbunden sind und jeweils umfassen:
- eine programmierbare Verzögerungsschaltung (30), die, im Falle der ersten Zelle der Reihe, auf einem Eingang das Digitalsignal des Orginalbilds erhält und im Falle der anderen Zellen das Ausgangssignal (SB) der vorhergehenden Zelle, um das an seinem Eingang vorhandene Signal zu verzögern um eine Verzögerung ($\alpha_l$ oder $\beta_l$), die abhängig ist von n x q und von der Art der gewählten Transformation und,
- eine Operatorschaltung (40), die ermöglicht, eine arithmetische Operation entsprechend der besagten Lineartransformation oder eine Vergleichsoperation entsprechend der besagten Nichtlineartransformation auszuführen, wobei diese Schaltung einerseits ein von der Verzögerungsschaltung kommendes Signal erhält und andererseits das Orginalbild-Digitalsignal im Falle der ersten Zelle oder das Ausgangssignal der vorhergehenden Zelle im Falle der anderen Zellen, der Ausgang der Operatorschaltung (40) dem Ausgang (SB) der Zelle entspricht,
die Vorrichtung die Durchführung der Lineartransformationen ermöglicht, deren z-Transformierte faktorisierbar ist in p Polynome des Typs $(1 + miz^{\alpha i})^{\pm 1}$, mi und $\alpha i$ bestimmt werden durch die Faktorisierung, die Vorrichtung dazu Filterzellen (T1A und/oder T1B) enthält, deren Anzahl f gleich der Anzahl p Polynome als Faktor ist, jede Zelle eine Verzögerung $\alpha i$ einführt, gleich dem Grad des ensprechenden Polynoms, die Anzahl f der Zellen größer sein kann als die Anzahl p für den Fall, daß die durch eine gegebene Zelle eingeführte Verzögerung kleiner ist als die in Betracht gezogene Verzögerung $\alpha i$, die Vorrichtung erlaubt, nichtlineare Transformationen durchzuführen, die Vorrichtung dazu Filterzellen (T1A und/oder T1B) enthält, deren Anzahl g gleich Max(x,y)+1 ist, mit x und y wie z.B. $2^x < n \leqq 2^{x+1}$ und $2^y < q \leqq 2^{y+1}$, jede Zelle i eine Verzögerung $\beta i$ gleich $2^{i-1}$ hat, die letzte Zelle eine Verzögerung gleich $n-2^x$ hat, wenn Max(x,y) = x oder $q-2^y$, wenn Max(x,y) = y, die Anzahl g der Zellen größer sein kann als Max(x,y) + 1 für den Fall, daß die durch eine gegebene Zelle eingeführte Verzögerung kleiner ist als die in Betracht gezogene Verzögerung $\beta i$.

**2.** Vorrichtung nach Anspruch 1, dadurch gekennzeichnet, daß für den Fall, wo die Verzogerung $\alpha i$ oder $\beta i$ nicht erreicht wird durch eine einzige Zelle, V Zellen in Kaskade geschaltet werden, um die erwünschte Verzögerung $\alpha i$ oder $\beta i$ derart zu erhalten, daß die Summe der durch jede Zelle eingeführten Verzögerungen gleich $\alpha i$ oder $\beta i$ ist.

**3.** Vorrichtung nach einem der Ansprüche 1 oder 2, dadurch gekennzeichnet, daß wenigstens V-1 Zellen, verwendet um die in Betracht gezogene Verzögerung $\alpha i$ oder $\beta i$ zu erhalten, wenigstens einen zweiten Eingang (EA) umfassen, verbunden mit der Verzögerungsschaltung (30), und daß wenigstens V-1 Zellen,

EP 0 358 553 B1

verwendet um diese Verzögerung zu erhalten, wenigstens einen zweiten Ausgang (SA) umfassen, von der Verzögerungschaltung (30) kommend, so daß die V Zellen in Kaskade geschaltet werden können, wobei der erste Ausgang von einer verbunden ist mit dem ersten Eingang (EB) der nachfolgenden Zelle und der zweite Ausgang (SA) von dieser Zelle verbunden ist mit dem zweiten Eingang (EA) der nachfolgenden Zelle.

4. Vorrichtung nach einem der Ansprüche 1 bis 3, dadurch gekennzeichnet, daß für den Fall, in dem die z-Transformierte wenigstens ein Polynom des Typs $(1+\text{mi}z^{-\alpha l})^{-1}$ umfaßt, die diesem Polynom entsprechende Zelle oder Zellen einen dritten Eingang haben, um das Ausgangssignal von eben dieser Zelle zu erhalten.

5. Vorrichtung nach einem der Ansprüche 1 bis 4, dadurch gekennzeichnet, daß die Vorrichtung eine oder mehrere Filterzellen umfaßt, die einen vierten Eingang (ED) aufweisen, um das Signal zu empfangen, das von einer Zelle flußaufwärts kommt, um Verarbeitungen zwischen den Bildern auszuführen.

6. Vorrichtung nach einem der Ansprüche 1 bis 5, dadurch gekennzeichnet, wobei die Verzögerungsschaltung das von einem der Eingänge (EA, EB, EC oder ED) stammende Signal der Zelle erhält, daß die Operatorschaltung (40) das Ausgangssignal der Verzögerungsschaltung (30) erhält und das Signal des ersten Eingangs (EB) der Zelle.

7. Vorrichtung nach einem der Ansprüche 1 bis 6, dadurch gekennzeichnet, daß jede Zelle außerdem Verteilereinrichtungen (20) der Eingangssignale umfaßt.

8. Vorrichtung nach Anspruch 7, dadurch gekennzeichnet, daß die Verteilereinrichtungen (20) gebildet werden durch Multiplexer.

9. Vorrichtung nach einem der Ansprüche 1 bis 8, dadurch gekennzeichnet, daß die Verzogerungsschaltung (30) ein Schieberegister umfaßt, gebildet durch eine Serie von k Registern (R1, R2, ...Rk), wobei k großer oder gleich der Verzögerung der in Betracht gezogenen Zelle ist, und eine Verteilerschaltung (301), von der jeder Eingang verbunden ist mit einem Ausgang eines Registers.

10. Vorrichtung nach einem der Ansprüche 1 bis 9, dadurch gekennzeichnet, daß die Operatorschaltung (40) eine arithmetische und logische Einheit umfaßt, die zwei Signale X und Y erhält, wobei das Signal X vom ersten Eingang (EB) der Zelle stammt und das Signal Y ausgegeben wird vom Ausgang der Verzögerungsschaltung (30) der Zelle.

11. Vorrichtung nach Anspruch 10, dadurch gekennzeichnet, daß die Operatorschaltung außerdem ein Multiplizierwerk (401) umfaßt, das sich zwischen dem Ausgang der Verzögerungsschaltung (30) und einem Eingang der arithmetischen und logischen Einheit (402) befindet.

12. Vorrichtung nach Anspruch 10 oder 11, dadurch gekennzeichnet, daß die Operatorschaltung (40) ebenfalls eine Verteilerschaltung (403) mit wenigstens zwei Eingängen umfaßt, wovon ein erster Eingang verbunden ist mit dem Ausgang der Verzögerungsschaltung der Zelle und der zweite Eingang verbunden ist mit dem ersten Eingang der Zelle und diese Schaltung gesteuert wird durch ein Signal, das die arthmetische und logische Einheit (402) liefert.

13. Vorrichtung nach Anspruch 12, dadurch gekennzeichnet, daß die Verteilerschaltung (403) einen dritten Eingang umfaßt, verbunden mit dem Ausgang der arithmetischen und logischen Einheit, um Lineartransformationen auszuführen.

14. Vorrichtung nach einem der Ansprüche 1 bis 13, dadurch gekennzeichnet, daß sie außerdem Steuereinrichtungen für jede Zelle umfaßt, die ermöglichen, die Position der Eingangs-Verteilereinrichtungen (20), die Verzögerung der Verzögerungsschaltung (30) und die arithmetische und logische Funktion der Operatorschaltung (40) vorauszubestimmen.

15. Vorrichtung nach Anspruch 14, dadurch gekennzeichnet, daß die Steuereinrichtungen (50) ein Programmierungsregister (501) umfassen.

16. Vorrichtung nach einem der Ansprüche 1 bis 15, dadurch gekennzeichnet, daß jede Zelle außerdem zwei zusätzlich Register umfaßt, ein erstes Register (60) zwischen dem Ausgang der Verzögerungsschaltung

11

(30) und einem Eingang der Operatorschaltung (40), und ein zweites Register (61) zwischen dem ersten Eingang (EB) der Zelle und dem anderen Eingang der Operatorschaltung (40).

**17.** Vorrichtung nach einem der Ansprüche 1 bis 16, dadurch gekennzeichnet, daß diese Vorrichtung in Form einer integrierten Schaltung hergestellt wird.

## Claims

**1.** Device for processing a digitized signal representative of an original image consisting of pixels, in which each pixel undergoes an n x q neighbourhood transformation in order to form a finishing image, where $n \geqq 1$, $q \geqq 1$ and $n \times q \geqq 3$, characterized in that the device makes it possible to carry out a linear or nonlinear transformation of the Max (x, y) or Min (x, y) type and in that for this purpose it includes filtering cells (T1A,T1B) with at least one input and at least one output, the number of which is strictly less than n x q, these cells being connected together in series and comprising respectively:
- a programmable delay circuit (30) receiving on an input, in the case of the first cell in the series, the digitized signal of the original image and in the case of the other cells, the output signal (SB) from the previous cell, so as to delay the signal present on its input by a delay ($\alpha_i$ or $\beta_i$) dependent on n x q and on the type of transformation chosen and,
- an operator circuit (40) making it possible to carry out an arithmetic operation corresponding to the said linear transformation or a comparison operation corresponding to the said non-linear transformation, this circuit receiving on the one hand a signal arising from the delay circuit and on the other hand the digitized signal from the original image in the case of the first cell or the output signal from the previous cell in the case of the other cells, the output of the said operator circuit (40) corresponding to the output (SB) of the cell,

the device making it possible to carry out linear transformations whose z-transform is factorizable into p polynomials of the type $(1 + m_i z^{-\alpha_i})^{\pm 1}$, $m_i$ and $\alpha_i$ being determined by the factorization, the device including for this purpose filtering cells (T1A and/or T1B), the number f of which is equal to the number p of factor polynomials, each cell introducing a delay $\alpha_i$, equal to the degree of the corresponding polynomial, the number f of cells possibly being greater than the number p in the case where the delay introduced by a given cell is less than the relevant delay $\alpha_i$, the device making it possible to carry out non-linear transformations, the device including for this purpose filtering cells (T1A and/or T1B), the number g of which is equal to Max (x, y) + 1 with x and y such that $2^x < n \leqq 2^{x+1}$ and $2^y < q \leqq 2^{y+1}$, each cell i having a delay $\beta_i$ equal to $2^{i-1}$, the last cell having a delay equal to $n - 2^x$ if Max (x, y) = x or $q - 2^y$ if Max (x, y) = y, the number g of cells possibly being greater than Max (x, y) + 1 in the case where the delay introduced by a given cell is less than the relevant delay $\beta_i$.

**2.** Processing device according to Claim 1, characterized in that in the case where the delay $\alpha_i$ or $\beta_i$ is not obtained through a single cell, V cells are cascaded to obtain the desired delay $\alpha_i$ or $\beta_i$ in such a way that the sum of the delays introduced by each cell is equal to $\alpha_i$ or $\beta_i$.

**3.** Processing device according to either of Claims 1 or 2, characterized in that at least V-1 cells used to obtain the relevant delay $\alpha_i$ or $\beta_i$ include at least one second input (EA) connected to the delay circuit (30) and in that at least V-1 cells used to obtain this delay include at least one second output (SA) originating from the delay circuit (30), such that the V cells can be placed in cascade, the first output of one being connected to the first input (EB) of the next cell, the second output (SA) of this same cell being connected to the second input (EA) of the same next cell.

**4.** Processing device according to any one of Claims 1 to 3, characterized in that in the case where the z-transform includes at least one polynomial of the type $(1 + m_i z^{-\alpha_i})^{-1}$, the cell or cells corresponding to this polynomial includes a third input in order to receive the output signal (SB) from this same cell.

**5.** Processing device according to any one of Claims 1 to 4, characterized in that the device comprises one or more filtering cells which include a fourth input (ED) to receive the signal originating from an upstream cell in order to perform inter-image processing.

**6.** Processing device according to any one of Claims 1 to 5, characterized in that, with the delay circuit receiving the signal originating from one of the inputs (EA, EB, EC or ED) of the cell, the operator circuit (40) receives the output signal from the delay circuit (30) and the signal from the first input (ED) of the cell.

7. Processing device according to any one of Claims 1 to 6, characterized in that each cell moreover includes input signal routing means (20).

8. Processing device according to Claim 7, characterized in that the routing means (20) consist of multiplexers.

9. Device according to any one of Claims 1 to 8, characterized in that the delay circuit (30) includes a shift register formed by a series of k registers (R1, R2, ... Rk), k being greater than or equal to the delay of the relevant cell, and a routing circuit (301), each input of which is connected to an output of a register.

10. Processing device according to any one of Claims 1 to 9, characterized in that the operator circuit (40) includes an arithmetic and logic unit receiving two signals X and Y, the signal X originating from the first input (EB) of the cell and the signal Y arising from the output of the delay circuit (30) of the cell.

11. Processing device according to Claim 10, characterized in that the operator circuit moreover includes a multiplier (401) placed between the output of the delay circuit (30) and an input of the arithmetic and logic unit (402).

12. Processing device according to Claim 10 or 11, characterized in that the operator circuit (40) also includes a routing circuit (403) with at least two inputs, a first input of which is connected to the output of the delay circuit of the cell and the second input of which is connected to the first input of the cell, this circuit being controlled by a signal delivered by the arithmetic and logic unit (402).

13. Processing device according to Claim 12, characterized in that the routing circuit (403) includes a third input connected to the output of the arithmetic and logic unit in order to perform linear transformations.

14. Processing device according to any one of Claims 1 to 13, characterized in that it moreover includes control means for each cell making it possible to predefine the setting of the input routing means (20), the delay of the delay circuit (30), and the arithmetic and logic function of the operator circuit (40).

15. Processing device according to Claim 14, characterized in that the control means (50) include a programming register (501).

16. Processing device according to any one of Claims 1 to 15, characterized in that each cell moreover includes two further registers, a first register (60) between the output of the delay circuit (30) and an input of the operator circuit (40), and a second register (61) between the first input (EB) of the cell and the other input of the operator circuit (40).

17. Device according to any one of Claims 1 to 16, characterized in that this device is produced in integrated circuit form.

# FIG. 1

# FIG. 2

# FIG. 3

# FIG. 4

# FIG. 5

# FIG. 6

FIG. 7

FIG. 8

FIG. 9

EP 0 358 553 B1